# EUROPÄISCHE PATENTANMELDUNG

(11) **EP 0 683 446 A1**
(43) Veröffentlichungstag der Anmeldung: **22.11.1995**
(21) Anmeldenummer: 95105699.3
(22) Anmeldetag: 15.04.1995
(51) Int. Cl.: G05D 23/19, G05B 19/10

(54) **Bediengerät für eine haustechnische Anlage**

(30) Priorität: 19.05.1994 CH 1552/94
(71) Anmelder: Landis & Gyr Technology Innovation AG, CH-6301 Zug (CH)
(72) Erfinder: Renner, Reinhard, D-73730 Esslingen (DE); Hartmann, Hans, CH-6340 Baar (CH)
(74) Vertreter: Müller, Hans-Jürgen, Dipl.-Ing.

(57) **Zusammenfassung**

Ein Bediengerät (2) weist eine Vielzahl von Bedienelementen (14, 15) auf. Häufig zu benutzende Bedienelemente (14, 15), bei der Heizungsanlage beispielsweise ein Sollwertversteller (14), sind auf einer ersten Bedienebene (3) angeordnet, während alle weiteren Bedienelemente (15) auf einer zweiten Bedienebene (4) plaziert sind. Das Bediengerät (2) weist zwei stabile Lagen auf, wobei sich in jeder Lage nur eine der Bedienebenen (3, 4) im Blickfeld des Benutzers befindet. Das bistabile Verhalten wird vorteilhaft dadurch erreicht, daß sich der Drehpunkt (D) unterhalb des Schwerpunktes (S) des Bediengeräts (2) befindet. Für einfache, häufiger gewünschte Bedienvorgänge wird der Benutzer nicht durch eine Vielzahl von Bedienelementen (14, 15) verwirrt, da sich ein Teil dieser Bedienelemente (15) auf der zweiten Bedienebene (4) befinden, zu der der Benutzer aber auf einfache Weise Zugang hat.

## Beschreibung

Die Erfindung bezieht sich auf ein Bediengerät der im Oberbegriff des Anspruchs 1 genannten Art.

Solche Bediengeräte ermöglichen es dem Anlagenbetreiber oder -benutzer, seine haustechnische Anlage, so etwa eine Heizungs- oder Klimaanlage, gemaß seinen Wünschen einzustellen und zu betreiben.

Es ist ein Bediengerät (Raumgerät mit Fernbedienungsschalter) dieser Art bekannt (Landis & Gyr-Druckschrift 2442D "Digitale Kessel-, Heizkreis- und Brauchwasserregelung RVP 65.130"), mit dessen Hilfe bestimmte Funktionen eines Reglers einstellbar bzw. veränderbar sind.

Bei Regel- und Steuergeräten für haustechnische Anlagen bestehen sehr vielfältige Möglichkeiten der Einstellung. Die meisten dieser Einstellungen werden beim Gerät der vorgenannten Art am eigentlichen Regler vorgenommen, während am Bediengerät nur wenige Einstellungen vorgenommen werden können. Beim vorerwähnten Bediengerät sind dies das Heizprogramm (Normalbetrieb, dauernd "Ein", dauernd "Absenkbetrieb") und die Sollwertverschiebung ("+" und "-"). Die am Regler selbst vorzunehmenden Einstellungen sind meist sehr komplex und erfordern eine Reihe von Bedienelementen. Die Aufnahme dieser weiteren Bedienelemente in das Bediengerät würde den Benutzer nur verwirren.

Der Erfindung liegt die Aufgabe zugrunde, ein Bediengerät zu schaffen, das für den Benutzer klar erkennbare Bedien- und Einstellmöglichkeiten bietet und die Bedienbarkeit gegenüber bekannten Geräten durchschaubarer macht und somit verbessert.

Die genannte Aufgabe wird erfindungsgemäß durch die Merkmale des Anspruchs 1 gelöst. Vorteilhafte Ausgestaltungen ergeben sich aus den abhängigen Ansprüchen.

Nachfolgend wird ein Ausführungsbeispiel der Erfindung anhand der Zeichnung näher erläutert.

Es zeigen:
- Fig. 1: ein Bediengerät in einer ersten Gebrauchslage,
- Fig. 2: das Bediengerät in einer zweiten Gebrauchslage,
- Fig. 3: eine Frontalansicht in der ersten Gebrauchslage und
- Fig. 4: eine Frontalansicht in der zweiten Gebrauchslage.

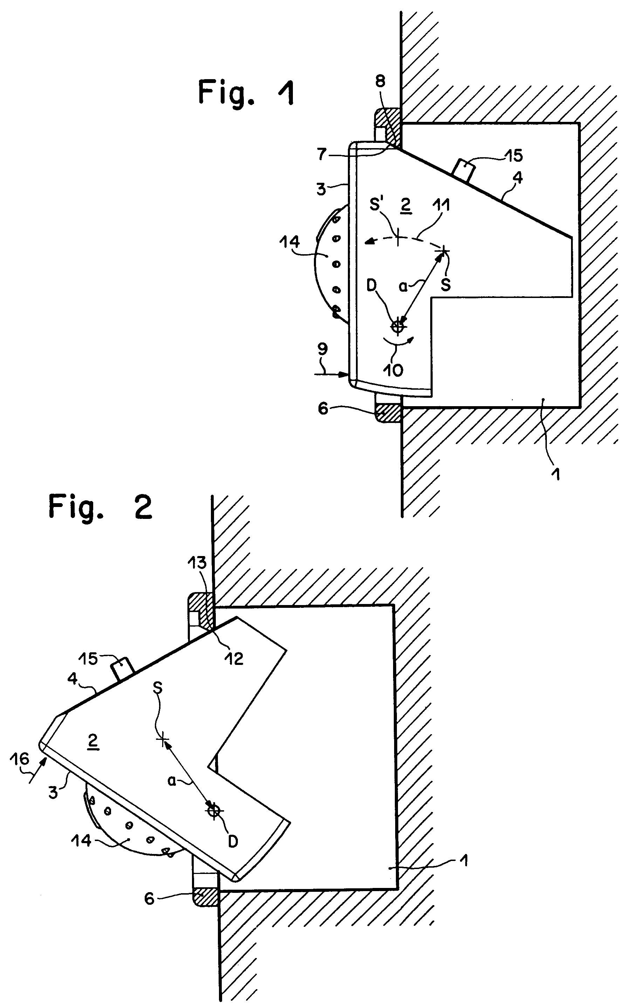

In den Fig. 1 und 2 bedeutet 1 eine beispielsweise würfelförmige Aussparung in einer Wand, die dazu bestimmt ist, ein Bauelement zum vertieften Einbau aufzunehmen. Solche Aussparungen 1 sind beispielsweise dazu bestimmt, Steckdosen und/oder elektrische Schalter für Beleuchtungsanlagen aufzunehmen, wie dies bei Unterputzinstallationen üblich ist. Innerhalb dieser Aussparung 1 ist ein einen geometrischen Körper darstellendes Bediengerät 2 angeordnet. Das Bediengerät 2 weist eine erste Bedienebene 3 und eine zweite Bedienebene 4 auf. Diese Bedienebenen 3 und 4 werden von zwei Seiten des geometrischen Körpers des Bediengeräts 2 gebildet. Die Anordnung des Bediengeräts 2 innerhalb der Aussparung 1 ist derart, daß das Bediengerät 2 um einen Drehpunkt D drehbar ist. Die Drehachse liegt dabei waagerecht. Das Bediengerät 2 weist einen Schwerpunkt S auf. Der Drehpunkt D und der Schwerpunkt S weisen einen Abstand a auf. Der Drehpunkt D befindet sich innerhalb der durch noch zu beschreibende Anschläge bestimmten Bewegungsfreiheit des Bediengeräts 2 unterhalb des Schwerpunktes S. Dadurch wird erreicht, daß das Bediengerät 2 eine einzige metastabile Lage aufweisen kann, bei der sich der Schwerpunkt S genau senkrecht über dem Drehpunkt D befindet, und daß daneben zwei stabile Endlagen vorhanden sind, die durch die Anschläge bestimmt sind.

Zum Bediengerät 2 gehört ein Einbaurahmen 6, der in für Unterputzinstallationen bekannten Weise an der Aussparung 1 montierbar ist. Bediengerät 2 und Einbaurahmen 6 sind miteinander so verbunden, daß das Bediengerät 2 gegen den Einbaurahmen 6 um den Drehpunkt D drehbar ist.

In der ersten Gebrauchslage (Fig. 1) stößt eine Teilfläche 7 des Bediengeräts 2 gegen eine Teilfläche 8 des Einbaurahmens 6. Die Teilflächen 7, 8 bilden also einen ersten Anschlag, in der das Bediengerät 2 unter der Wirkung der Schwerkraft verharrt.

Will der Benutzer Zugang zur zweiten Bedienebene 4 bekommen, so erreicht er dies durch Ausübung einer Kraft in einer durch einen Pfeil 9 angedeuteten Lage und Richtung. Die Krafteinwirkung, die beispielsweise mit einem Finger ausgeübt werden kann, erfolgt auf eine Partie der ersten Bedienebene 3 unterhalb des Drehpunktes D, vorzugsweise in der Nähe des unteren Randes der Bedienebene 3. Die Kraft ist annähernd senkrecht zur Bedienebene 3 gerichtet.

Durch die Einwirkung der Kraft dreht sich das Bediengerät 2 in der durch einen Pfeil 10 gekennzeichneten Weise. Bei dieser Drehbewegung wandert der Schwerpunkt S entlang einer durch einen gestrichelt gezeichneten Pfeil 11 bezeichneten Linie. Sobald der Schwerpunkt S bei dieser Drehbewegung einen Punkt S', der sich senkrecht über dem Drehpunkt D befindet, überschreitet, kippt das Bediengerät 2 selbsttätig in die zweite Gebrauchslage (Fig. 2). Diese Endlage ist dadurch bestimmt, daß eine Teilfläche 12 des Bediengeräts 2 gegen eine Teilfläche 13 des Einbaurahmens 6 stößt. In dieser Gebrauchslage ist für den Benutzer die zweite Bedienebene 4 zugänglich.

Gemäß den Fig. 1 bis 4 ist bei dem hier gezeigten Ausführungsbeispiel auf der ersten Bedienebene 3 allein ein Sollwertsteller 14 angeordnet, mit dem die Solltemperatur des Raumes bzw. der Heizungsanlage verstellt werden kann. Gemäß den Fig. 1, 2 und 4 ist auf der zweiten Bedienebene 4 ein Funktionsartenumschalter 15 angeordnet.

Hat der Benutzer das Bediengerät 2 von der in der Fig. 1 gezeigten Gebrauchslage in der geschilderten Weise in die in der Fig. 2 dargestellten zweite Gebrauchslage gebracht, so kann er die Zurückstellung in die erste Gebrauchslage durch Ausübung einer Kraft in einer durch einen Pfeil 16 angedeuteten Lage und Richtung bewirken. Die Krafteinwirkung, die wiederum durch einen Finger ausgeübt werden kann, erfolgt auf eine Partie der ersten Bedienebene 3 oberhalb des Drehpunktes D, vorzugsweise in der Nähe des oberen Randes der Bedienebene 3. Die Kraft ist annähernd senkrecht zur Bedienebene 3 gerichtet.

Wie erwähnt, weist das Bediengerät 2 zwei stabile Gebrauchslagen auf. Die erste Gebrauchslage ist in der Fig. 1 dargestellt. In dieser Lage ist allein die erste Bedienebene 3 für den Benutzer zugänglich, während sich die zweite Bedienebene 4 innerhalb der Aussparung 1 befindet und somit dem Zugriff des Benutzers entzogen ist. Die zweite Gebrauchslage, dargestellt in der Fig. 2, ist dadurch gekennzeichnet, daß das Bediengerät 2 gegenüber der ersten Lage gekippt ist, wodurch die zweite Bedienebene 4 zugänglich ist.

Vorteilhaft befindet sich die Aussparung 1 in einer solchen Höhe über der Fußbodenoberkante, daß sie sich unterhalb der Augenhöhe eines Menschen befindet. Beispielsweise kann die Einbauhöhe etwa 1,0 bis 1,4 m betragen. Dadurch wird erreicht, daß der Benutzer in der ersten Lage die Bedienebene 3 und in der zweiten Lage die Bedienebene 4 gut im Blickfeld hat und bequem bedienen kann.

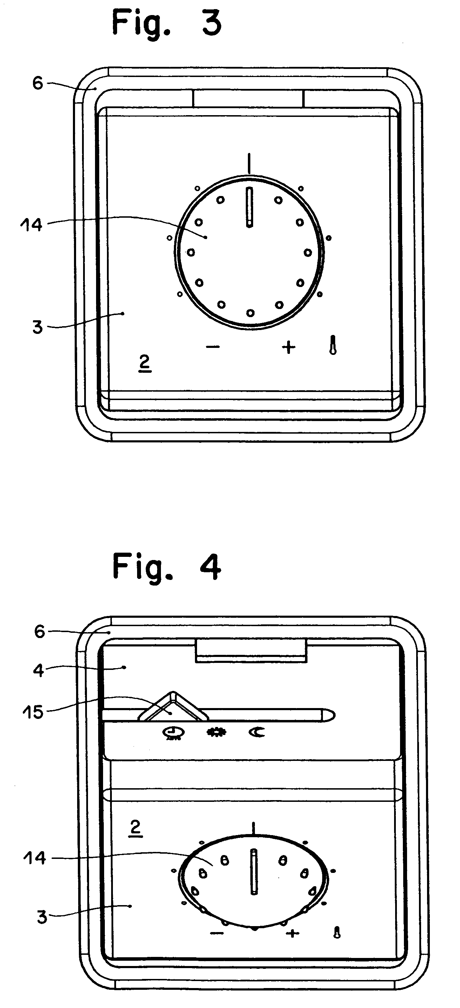

Zur Verdeutlichung ist in der Fig. 3 eine Frontalansicht der ersten Gebrauchslage gezeigt. Die Bezugszahlen entsprechen dabei jenen der Fig. 1. In dieser Gebrauchslage hat der Benutzer allein den Sollwertversteller 14 im Blickfeld, wobei die Bedeutung des Sollwertverstellers 14 durch Symbole wie "Thermometer" und Plus- und Minuszeichen erläutert sein kann.

Zur weiteren Verdeutlichung ist in der Fig. 4 eine Frontalansicht der zweiten Gebrauchslage gezeigt. Zwar sind hier prinzipiell beide Bedienebenen 3, 4 sichtbar, jedoch ist die Aufmerksamkeit des Benutzers auf die sich oben befindende zweite Bedienebene 4 gelenkt, da sich bei geeigneter Einbauhöhe allein diese Bedienebene im Blickfeld des Benutzers befindet. Auf dieser zweiten Bedienebene 4 befindet sich der Funktionsartumschalter 15, mit dem der Benutzer die Heizungsanlage zwischen den Betriebsarten "AUTO" mit Komfort-Heizbetrieb am Tage und Absenkbetrieb bei Nacht und den übrigen Betriebsarten umschalten kann. Diese übrigen Betriebsarten können beispielsweise sein: "Dauernd Komfortbetrieb", symbolhaft gekennzeichnet durch eine Sonne, und "Dauernd Absenkbetrieb", symbolhaft gekennzeichnet durch einen Mond.

Die erste Bedienebene 3 weist beispielsweise ein einziges Bedienelement auf, nämlich den Sollwertversteller 14. Mit diesem Bedienelement kann der Benutzer die gelegentlich gewünschte Veränderung des Solltwertes der Raumtemperatur beeinflussen. Erfindungsgemäß werden auf der ersten Bedienebene 3 die unverzichtbaren Bedienelemente für einen eingeschränkten Funktionsumfang angeordnet. Welcher Art diese auf der ersten Bedienebene 3 anzuordnenden Bedienelemente sind, hängt von der Art der haustechnischen Anlage ab. Bei einem Fenster-Klimagerät kann dies beispielsweise lediglich der Ein-Aus-Schalter sein.

Die zweite Bedienebene 4 weist demgegenüber weitere Bedienelemente auf, die für einen größeren Funktionsumfang erforderlich sind. Ist die haustechnische Anlage, die gesteuert werden soll, eine Heizungsanlage, so können die auf der zweiten Bedienebene 4 angeordneten Bedienelemente sein: eine Programmiereinrichtung für Schaltzeiten, Mittel zum Einstellen der Brauchwassertemperatur und/oder zum Auslösen einer vom Regelbetrieb abweichenden zusätzlichen Speicherladung, Mittel zum temporären Verstellen der Heizzeiten usw. Im hier vorgestellten Ausführungsbeispiel ist auf der zweiten Bedienebene 4 lediglich der Funktionsartenumschalter 15 angeordnet.

Beim erfindungsgemäßen Bediengerät 2 ist es möglich, klar zwischen zwei Zugriffsmöglichkeiten zu unterscheiden. Auf der ersten Bedienebene 3 sind jene Bedienelemente angeordnet, die der Benutzer regelmäßig benötigt. Weil nur diese wenigen Bedienelemente auf dieser ersten Bedienebene 3 angeordnet sind, wird der Benutzer nicht durch Bedienelemente verwirrt, die er gar nicht benötigt. Benötigt er in Ausnahmefällen zusätzliche Bedienelemente, weil er die Funktion der haustechnischen Anlage weitergehend beeinflussen will, so kann er durch eine einfache Manipulation die zweite Bedienebene 4 zugänglich machen.

Daß dem Benutzer jeweils nur eine Bedienseite 3, 4 zugekehrt ist, muß nicht in allen Fällen heißen, daß jeweils die andere Bedienseite 4, 3 dem Zugriff des Benutzers völlig entzogen ist. Es sind verschiedene Ausgestaltungen möglich. Vorteilhaft ist, wenn das Bediengerät 2 so gestaltet ist, daß in seiner ersten Lage, bei der dem Benutzer die erste Bedienseite 3 zugekehrt ist, die zweite Bedienseite 4 dem Zugriff des Benutzers dadurch entzogen ist, daß sie innerhalb der Aussparung 1 liegt. In dem Fall, da dem Benutzer die zweite Bedienseite 4 zugekehrt ist, kann es vorteilhaft sein, daß dem Benutzer der Zugriff auf die erste Bedienseite 3 entzogen ist, jedoch kann es andererseits auch vorteilhaft sein, auch die erste Bienseite 3 dem Benutzer zugänglich zu halten.

Beim Ausführungsbeispiel gemäß den Fig. 1 bis 4 ist der Winkel zwischen den beiden Bedienseiten 3 und 4 kleiner als 90 Grad. Ein Wert von etwa 60 Grad ist vorteilhaft.

Für die konstruktive Gestaltung besteht ein großer Spielraum. Die Kippwirkung, die beim Ausführungsbeispiel gemäß den Fig. 1 und 2 allein durch die Wirkung der Schwerkraft erreicht wird, kann durch ein eine Feder enthaltendes bistabiles Kippsystem ergänzt oder auch ersetzt werden, wodurch die Freiheit in der konstruktiven Gestaltung erhöht wird. Bei Anwendung eines solchen Kippsystems besteht auch größere Freiheit in der Lage der Drehachse; sie kann dann auch senkrecht sein.

Das erfindungsgemäße Bediengerät 2 kann also eine Vielzahl von Bedienelementen aufweisen. Die häufig zu benutzenden Bedienelemente, bei einer Heizungsanlage beispielsweise der Sollwertversteller für die Raumtemperatur, bei einer Feuchtigkeitsregelung beispielsweise der Sollwertversteller für die relative Luftfeuchtigkeit, sind auf der ersten Bedienebene 3 angeordnet, während alle weiteren Bedienelemente auf der zweiten Bedienebene 4 plaziert sind. Das Bediengerät 2 weist zwei stabile Lagen auf, wobei sich in jeder Lage nur eine der Bedienebenen 3, 4 im Blickfeld des Benutzers befindet. Für einfache, häufiger gewünschte Bedienvorgänge wird der Benutzer nicht durch eine Vielzahl von Bedienelementen verwirrt, da sich diese auf der zweiten Bedienebene 4 befinden, zu der der Benutzer aber auf einfache Weise Zugang hat. Das erfindungsgemäße Bediengerät 2 läßt sich mit anderen Installationen, beispielsweise mit einem Lichtschalter, in einer Unterputz-Montageeinheit kombinieren.

Auf der Basis der vorgenannten Erfindung ist es also auch möglich, ein Bediengerät zu schaffen, das die gegenüber bei bekannten Bediengeräten vorhandenen Bedien- und Einstellmöglichkeiten deutlich erweitert, ohne dabei den Benutzer im Hinblick auf die häufigsten Bedienhandlungen zu verwirren.

Die Erfindung gestattet es zudem, das Bediengerät einer haustechnischen Anlage mit vorhandenen Schaltern einer Beleuchtungsanlage zu einer Einheit zu kombinieren, so daß der Benutzer eine kompakte Einrichtung vorfindet, an der er zentral mehrere Einrichtungen bedienen kann.

## Patentansprüche

1. Bediengerät (2) für eine haustechnische Anlage, das Bedienelemente aufweist, mit deren Hilfe der Benutzer die Funktion der haustechnischen Anlage beeinflussen kann, dadurch gekennzeichnet, daß das Bediengerät (2) neben einer ersten Bedienebene (3) mit einer geringen Anzahl von Bedienelementen (14) und eingeschränkten Beeinflussungsmöglichkeiten für die haustechnische Anlage eine zweite Bedienebene (4) aufweist, die weitere Bedienelemente (15) aufweist, durch die der Benutzer die Möglichkeit einer weitergehenden Beeinflussung der Funktion der haustechnischen Anlage besitzt, und daß das Bediengerät (2) derart gestaltet ist, daß das Bediengerät (2) durch den Benutzer in eine Lage verstellbar ist, in der dem Benutzer die zweite Bedienebene (4) zugekehrt ist, und daß der Benutzer in der Lage ist, jederzeit zwischen der ersten und der zweiten Bedienebene (3, 4) zu wählen.

2. Bediengerät (2) nach Anspruch 1, dadurch gekennzeichnet, daß das Bediengerät (2) mittels eines Einbaurahmens (6) in eine Aussparung (1), beispielsweise in eine Wand, vertieft einbaubar ist und daß die beiden Bedienebenen (3, 4) je eine Seite eines geometrischen Körpers, der das Bediengerät (2) umfaßt, darstellen, daß dem Benutzer jeweils nur eine der Bedienseiten (3, 4) zugekehrt ist und daß die Wahl der dem Benutzer zugekehrten Bedienseite (3, 4) durch Bewegen des Körpers von einer ersten in eine zweite stabile Endlage erfolgt.

3. Bediengerät nach Anspruch 2, dadurch gekennzeichnet, daß in der ersten Lage, bei der dem Benutzer die erste Bedienseite (3) zugekehrt ist, die dem Benutzer nicht zugekehrte zweite Bedienseite (4) so innerhalb der Aussparung (1) liegt, daß sie dem Benutzer nicht zugänglich ist.

4. Bediengerät nach Anspruch 2 oder 3, dadurch gekennzeichnet, daß in der zweiten Lage, bei der dem Benutzer die zweite Bedienseite (4) zugekehrt ist, die dem Benutzer nicht zugekehrte erste Bedienseite (3) außerhalb der Aussparung (1) liegt, so daß sie dem Benutzer zusätzlich zugänglich ist.

5. Bediengerät nach Anspruch 2 oder 3, dadurch gekennzeichnet, daß in der zweiten Lage, die dem Benutzer nicht zugekehrte erste Bedienseite innerhalb der Aussparung (1) liegt.

6. Bediengerät nach einem der Ansprüche 2 bis 5, dadurch gekennzeichnet, daß das Bediengerät (2) um eine waagerechte Achse kippbar ist, wobei sich der Drehpunkt (D) unterhalb des Schwerpunktes (S) des Bediengeräts (2) befindet, und daß die Endlagen durch Anschläge (7, 8; 12, 13) bestimmt sind.

7. Bediengerät nach einem der Ansprüche 2 bis 6, dadurch gekennzeichnet, daß ein bistabiles Kippsystem die Kippbewegung zwischen den beiden Endlagen unterstützt.

8. Bediengerät nach einem der Ansprüche 2 bis 7, dadurch gekennzeichnet, daß die beiden Bedienseiten (3, 4) einen Winkel einschließen, der kleiner ist als 90 Grad.

9. Bediengerät nach Anspruch 8, dadurch gekennzeichnet, der der Winkel etwa 60 Grad beträgt.
